# EUROPÄISCHE PATENTANMELDUNG

(11) **EP 3 988 595 A1**
(43) Veröffentlichungstag der Anmeldung: **27.04.2022**
(21) Anmeldenummer: 20203814.7
(22) Anmeldetag: 26.10.2020
(51) Int. Cl.: C08G 18/08, C08G 18/10, C08G 18/32, C08G 18/42, C08G 18/73, C08G 18/75, C09J 175/06

(54) **EINSATZ VON FRISCHSOL IN FORMULIERUNGEN AUF BASIS VON POLYURETHANDISPERSIONEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft eine wässrige Dispersion mindestens enthaltend (A) mindestens ein Polyurethan, (B) mindestens ein Frischsol und (C) gegebenenfalls weitere Additive, wobei das mindestens eine Polyurethan anionisch hydrophiliert ist, ein Verfahren zur Herstellung der Dispersion, die Verwendung der Dispersion zur Herstellung einer Klebstoffzusammensetzung, eine entsprechende Klebstoffzusammensetzung, einen Klebstoffverbund, enthaltend mindestens ein mit dieser Klebstoffzusammensetzung verklebtes Substrat, ein Verfahren zur Herstellung eines Klebstoffverbundes und die Verwendung eines Frischsols zum Erzielen einer Verdickerwirkung in einer wässrigen Polyurethan-Dispersion.

## Beschreibung

Die Erfindung betrifft eine wässrige Dispersion mindestens enthaltend (A) mindestens ein Polyurethan, (B) mindestens ein Frischsol und (C) gegebenenfalls weitere Additive, wobei das mindestens eine Polyurethan anionisch hydrophiliert ist, ein Verfahren zur Herstellung der Dispersion, die Verwendung der Dispersion zur Herstellung einer Klebstoffzusammensetzung, eine entsprechende Klebstoffzusammensetzung, einen Klebstoffverbund, enthaltend mindestens ein mit dieser Klebstoffzusammensetzung verklebtes Substrat, ein Verfahren zur Herstellung eines Klebstoffverbundes und die Verwendung eines Frischsols zum Erzielen einer Verdickerwirkung in einer wässrigen Polyurethan-Dispersion.

Wässrige, versprühbare Kontaktklebstoffe zur Herstellung einer Nassverklebung werden überwiegend auf Basis von Polychloropren-Dispersionen hergestellt. Sie werden in verschiedenen Bereichen eingesetzt, insbesondere zur Schaumverklebung von Matratzen und Möbeln. Dabei werden üblicherweise zwei Verfahren eingesetzt. Beim 2-Komponenten-Verfahren (2K-Verfahren) werden in einer Spritzpistole, die zwei Düsen besitzt, gleichzeitig Klebstoff-Formulierung und wässriges Koagulationsmittel durch Verdüsen vermischt, siehe dazu beispielsweise DE 10 2006 045384 A1. Beim 1-Komponenten-Verfahren (1K-Verfahren) wird eine Klebstoff-Formulierung durch eine Spritzpistole mit einer Düse versprüht, siehe dazu beispielsweise EP 0 624 634 A1 oder EP 0 470 928 A1.

Klebstoffformulierungen auf Basis von wässrigen Polyurethan-Dispersionen haben sich in industriellen Anwendungen etabliert, beispielsweise bei der Schuhfertigung, der Verklebung von Teilen für die KFZ-Innenausstattung, der Folienlaminierung oder der Verklebung von textilen Substraten.

Bei der Verwendung solcher Dispersionen zum Kleben von Substraten wird üblicherweise nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, beispielsweise mit einem Infrarotstrahler, aktiviert und in einen klebfähigen Zustand überführt. Dispersionen, welche für die Anwendung des Thermoaktivierverfahrens geeignet sind, werden beispielsweise in der US-A 4 870 129 beschrieben. Danach können durch Verwendung spezieller Mischungen von Diisocyanaten nach dem Acetonverfahren geeignete, wässrige Polyurethan- bzw. Polyurethan-Polyharnstoff-Dispersionen erhalten werden. Die daraus erhältlichen Filme weisen eine gute Thermoaktivierbarkeit auf.

Mischungen von speziellen polyesterbasierten Polyurethandispersionen mit Sulfonatgruppen und wässrigen aliphatischen Polyurethandispersionen werden in der US-A 6,797,764 beschrieben. Diese weisen nach dem Thermoaktivierverfahren eine gute Haftfestigkeit auf einer Vielzahl von Metall- und Plastiksubstraten auf.

Bei der Verwendung von Polyurethan- bzw. Polyurethan-Polyharnstoff-Dispersionen kann des Weiteren nach dem Verfahren der Nassverklebung gearbeitet werden. Dabei erfolgt die Verklebung unmittelbar nach dem Klebstoffauftrag. Bis zum Abbinden des Klebstoffes ist jedoch eine mechanische Fixierung der zu verbindenden Teile erforderlich. Dieses Verfahren wird häufig zur Verklebung von Holz oder textilen Substraten verwendet.

In EP 1 664 227 B1 werden Klebstoffe auf Basis von Polyurethan-Dispersionen beschrieben. Diese Dispersionen zeigen durch Zusatz von Kieselsolen mit einem Partikeldurchmesser von mindestens 50 nm bei der Verklebung eine höhere Anfangswärmefestigkeit, wobei Kieselsole mit kleineren Partikeln diesen Effekt nicht zeigen. Die offenbarten Formulierungen sind niedrigviskos.

Der Nachteil der genannten Verfahren des Standes der Technik liegt in der niedrigen Viskosität der eingesetzten Mischungen. Zudem kann ein nicht unerheblicher Teil des Klebstoffs durch Absacken, Durchhängen, sowie das Eindringen in die Poren der Schaumsubstrate, das so genannte "sagging", für die Verklebung nicht mehr zur Verfügung stehen.

Um das "sagging" oder bei der Sprühapplikation ein "Overspray" zu verhindern, wird die Viskosität der Formulierungen im Allgemeinen durch Verdicker in den Bereich von ca. 2000 bis 4000 mPa·s angehoben. Dies erfolgt üblicherweise durch organische Verdicker, die toxikologisch bedenklich sind und den Gehalt an flüchtigen, organischen Verbindungen (VOC oder VVOC) nachteilig erhöhen.

In der WO 2003/016370 A1 wird ein Verfahren zur Herstellung von Kieselsäure-Polyurethan-Nanocompositen beschrieben. Dabei wird im ersten Schritt aus der Kieselsäurelösung ein Kieselsol erzeugt und mit Polyolen versetzt. Das Wasser wird entfernt und das Polyol-Kieselsäurekolloid zusammen mit Diisocyanat und anderen Stoffen zu einem Kieselsäure-Polyurethan umgesetzt. Ziel ist es, durch den Einbau von Kieselsol im Polyurethan dessen Brandschutz zu verbessern.

In der WO 2001/090271 A1 wird eine spritzbare 1-Komponenten Polyurethan-Klebstoff-Formulierung unter Zusatz von pyrogener Kieselsäure beschrieben. Ziel ist es, durch den Zusatz der pyrogenen Kieselsäure das Standvermögen des Klebstoffs bei gutem Spritzverhalten zu verbessern. Dies gelingt, indem bei der Herstellung der Polyurethandispersion Präpolymere und Funktionalität der Polyisocyanate modifiziert werden.

EP 2 486 072 B1 offenbart eine spritzbare Polyurethan-Klebstoff-Formulierung mit hoher Standfestigkeit und guter Pistolenspritzbarkeit unter Zusatz von Thixotropie-Verdickern, Phthalaten und pyrogener Kieselsäure.

Eine Stabilisierung von Frischsol durch Polyurethandispersionen und die daraus resultierende Erhöhung der Viskosität und Verlängerung der Lagerstabilität der Formulierungen, sowie eine Erhöhung des Wärmestandes der Verklebungen wird im Stand der Technik beschrieben.

Die Aufgabe der vorliegenden Erfindung besteht somit in der Bereitstellung von wässrigen Dispersionen auf Polyurethan-Basis, welche als Klebstoffe, insbesondere im Thermoaktivierverfahren und in der Nassverklebung, zu verwenden sind und dabei hervorragende Klebeigenschaften zeigen. Des Weiteren sollen diese Dispersionen die im Stand der Technik beschriebenen Nachteile nicht aufweisen, insbesondere sollen die Klebstoff-Formulierungen, eine für die Anwendung geeignete Viskosität aufweisen, lange lagerfähig sein ohne zu koagulieren, viskositätsstabil sein und Verdicker enthalten, die toxikologisch unbedenklich sind und die den Anteil an flüchtigen organischen Verbindungen (VOC) nicht erhöhen. Die erfindungsgemäßen wässrigen Dispersionen sollen im Vergleich zum Stand der Technik einen erhöhten Wärmestand aufweisen.

Diese Aufgaben werden gelöst durch die erfindungsgemäße wässrige Dispersion mindestens enthaltend
(A) mindestens ein Polyurethan,
(B) mindestens ein Frischsol und
(C) gegebenenfalls weitere Additive,
wobei das mindestens ein Polyurethan anionisch hydrophiliert ist.

Die erfindungsgemäße Dispersion, insbesondere die Komponenten (A), (B) und (C), werden im Folgenden detailliert beschrieben.

### Komponente (A)

Die erfindungsgemäße wässrige Dispersion enthält mindestens ein Polyurethan, wobei dieses anionisch hydrophiliert ist.

Bevorzugt betrifft die vorliegende Erfindung die erfindungsgemäße Dispersion, wobei das mindestens eine Polyurethan aufgebaut ist aus
a) mindestens einem difunktionellen Polyesterpolyol, bevorzugt mit einem Molekulargewicht von 400 bis 5000 g/mol,
b) mindestens einem Polyisocyanat, und
c) mindestens einem Kettenverlängerer,
d) gegebenenfalls weiteren von a), b) und c) unterschiedlichen Bausteinen,
wobei zumindest eine der Komponenten a), b), c) und d) mindestens eine anionisch hydrophilierende Gruppe trägt.

Erfindungsgemäß bevorzugt trägt Komponente c) mindestens eine anionisch hydrophilierende Gruppe. Erfindungsgemäß weiter bevorzugt tragen die Komponenten a), b) und d) keine anionisch hydrophilierenden Gruppen.

Anionisch hydrophilierende Gruppen im Rahmen der vorliegenden Erfindung sind beispielsweise eine oder mehrere Sulfonatgruppen, eine oder mehrere Carboxylatgruppen und/oder eine oder mehrere Phosphatgruppen. Der Begriff anionische Gruppe umfasst erfindungsgemäß auch Gruppen, die in anionische Gruppen überführt werden können. Entsprechend werden erfindungsgemäß auch Carbonsäure-, Sulfonsäure- oder Phosphorsäuregruppen als anionisch hydrophilierende Gruppen aufgefasst.

### Komponente a):

Das erfindungsgemäß vorliegende Polyurethan ist bevorzugt aus mindestens einem difunktionellen Polyesterpolyol, bevorzugt mit einem Molekulargewicht von 400 bis 5000 g/mol, als Komponente a) aufgebaut.

Erfindungsgemäß bevorzugt sind die als Komponente a) eingesetzten Polyesterpolyole kristalline oder teilkristalline difunktionelle Polyesterpolyole. Methoden zur Bestimmung des Vorliegens oder der Abwesenheit von Kristallinität sind dem Fachmann bekannt, beispielsweise die Differential Scanning Calorimetry (DSC) nach DIN 65467: 1999-03.

Weiter bevorzugt sind die eingesetzten Polyesterpolyole lineare oder auch schwach verzweigte Polyesterpolyole, die weiter bevorzugt auf Dicarbonsäuren und/oder deren Derivaten, wie Anhydride, Ester oder Säurechloride und, bevorzugt aliphatischen, linearen Polyolen basieren. Auch Mischungen von Dicarbonsäuren und/oder deren Derivate sind geeignet.

Geeignete Dicarbonsäuren sind beispielsweise ausgewählt aus der Gruppe bestehend aus Adipinsäure, Bernsteinsäure, Sebacinsäure, Dodecandisäure und Mischungen davon. Bevorzugt sind Bernsteinsäure, Adipinsäure und Sebacinsäure und deren Mischungen, besonders bevorzugt sind Bernsteinsäure und Adipinsäure und deren Mischungen, ganz besonders bevorzugt ist Adipinsäure. Die genannten Dicarbonsäuren werden in einer Menge von mindestens 90 mol-%, bevorzugt 95 bis 100 mol-%, jeweils bezogen auf die Gesamtmenge aller Carbonsäuren, eingesetzt.

Die als Komponente a) eingesetzten, bevorzugt difunktionellen, Polyesterpolyole können beispielsweise durch Polykondensation von Dicarbonsäuren mit Polyolen hergestellt werden. Die hierfür eingesetzten Polyole haben bevorzugt ein Molekulargewicht von 62 bis 399 g/mol, bestehen aus 2 bis 12 C-Atomen, sind vorzugsweise unverzweigt, difunktionell und/oder weisen bevorzugt primäre OH-Gruppen auf.

Beispiele für Polyole, die für die Herstellung der als Komponente a) eingesetzten Polyesterpolyole verwendet werden können, sind mehrwertige Alkohole, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische.

Bevorzugte Polyolkomponenten für die Polyesterpolyole a) sind Ethandiol-1,2, Butandiol-1,4 und Hexandiol-1,6, besonders bevorzugt sind Butandiol-1,4 und Hexandiol-1,6, ganz besonders bevorzugt ist Butandiol-1,4.

Die Polyesterpolyole a) können aus einem oder mehreren Polyolen aufgebaut sein. In einer bevorzugten Ausführungsform der vorliegenden Erfindung sind sie nur aus einem Polyol aufgebaut.

Wenn die kristallinen oder teilkristallinen difunktionellen Polyesterpolyole mit einem zahlenmittleren Molekulargewicht von wenigstens 400 g/mol und/oder einer Schmelztemperatur von wenigstens 35 °C eine Schmelzwärme von wenigstens 50 J/g aufweisen, so hat das unter Verwendung desselben hergestellten Polyurethans regelmäßig eine Schmelzwärme von wenigstens 35 J/g. Falls gewünscht kann eine Adjustierung der Schmelzwärme des Polyurethans durch eine leichte Veränderung des Gehaltes an Polyesterpolyol a) in der Zusammensetzung oder durch eine geringe Variation der Schmelzwärme des Polyesterpolyols erreicht werden. Diese Maßnahmen erfordern lediglich orientierende Versuche und liegen völlig innerhalb der praktischen Erfahrung des Durchschnittsfachmanns auf diesem Gebiet.

Die Herstellung von Polyesterpolyolen a) ist aus dem Stand der Technik bekannt.

Das zahlenmittlere Molekulargewicht der Polyesterpolyole a) liegt bei 400 bis 5000 g/mol, bevorzugt bei 1000 bis 3000 g/mol, besonders bevorzugt bei 1500 bei 2500 g/mol, ganz besonders bevorzugt bei 1800 bis 2400 g/mol.

Die Schmelztemperatur der kristallinen bzw. teilkristallinen Polyesterpolyole liegt bevorzugt bei mindestens 35 °C, bevorzugt bei 40 bis 80 °C, besonders bevorzugt bei 42 bei 60 °C und ganz besonders bevorzugt bei 45 bis 52 °C. Die Schmelzwärme beträgt mindestens 20 J/g, bevorzugt mindestens 30 J/g und besonders bevorzugt mindestens 40 J/g.

### Komponente a'):

Gegebenenfalls können erfindungsgemäß neben den zuvor beschriebenen Polyesterpolyolen (Komponente a)) auch difunktionelle Polyolkomponenten mit einem Molekulargewicht von 62 bis 399 g/mol als Komponente a') vorliegen.

Entsprechende difunktionelle Polyolkomponenten mit einem Molekulargewicht von 62 bis 399 g/mol (Komponente a')) sind beispielsweise die zur Herstellung der Polyesterpolyole a) genannten Polyole. Auch niedermolekulare Polyesterdiole, Polyetherdiole, Polycarbonatdiole oder andere Polymerdiole sind prinzipiell geeignet, sofern sie ein Molekulargewicht von 62 bis 399 g/mol aufweisen.

### Komponente b):

Als Komponente b) sind beliebige organische Verbindungen geeignet, die mindestens zwei freie Isocyanatgruppen pro Molekül aufweisen. Bevorzugt werden Diisocyanate der Formel Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoff-Atomen, einen zweiwertigen aromatischen Kohlenwasserstoffrest mit 6 bis 15 Kohlenstoff-Atomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methyl-cyclohexan, 4,4'-Diisocyanato-dicyclohexyl-methan, 4,4'-Diisocyanato-dicyclohexyl-propan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrion-struktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Erfindungsgemäß besonders bevorzugte Komponenten b) sind Hexamethylendiisocyanat (HDI) und 1-Isocyanato-3,3,5-trimethyl-5-isocyanatomethyl-cyclohexan (IPDI) sowie deren Gemische.

### Komponente c):

Die erfindungsgemäße eingesetzte Komponente c) ist mindestens ein Kettenverlängerer. Erfindungsgemäß bevorzugt trägt Komponente c) mindestens eine anionisch hydrophilierende Gruppe.

Bevorzugte als Komponente c) eingesetzte Verbindungen die mindestens eine anionisch hydrophilierende Gruppe tragen, sind ausgewählt aus der Gruppe bestehend aus Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren, deren Alkali- und Ammoniumsalzen und Mischungen davon.

Die vorliegende Erfindung betrifft daher bevorzugt die erfindungsgemäße wässrige Dispersion, wobei in dem mindestens einen Polyurethan die als Komponente c) eingesetzte Verbindung die mindestens eine anionisch hydrophilierende Gruppe trägt und bevorzugt ausgewählt ist aus der Gruppe bestehend aus Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren, deren Alkali- und Ammoniumsalzen und Mischungen davon.

Beispiele sind Dimethylolpropionsäure, Dimethylolbuttersäure, Hydroxypivalinsäure, N-(2-Aminoethyl)-β-alanin, N-(2-Aminoethyl)-2-aminoethansulfonsäure, N-(2-Aminoethyl)-2-aminoethancarbonsäure Ethylendiaminpropyl- oder -butylsulfonsäure, 1,2- oder 1,3-Propylendiamin-β-ethylsulfonsäure, Äpfelsäure, Zitronen-säure, Glykolsäure, Milchsäure, Glycin, Alanin, Taurin, Lysin, 3,5-Diaminobenzoesäure, ein Additionsprodukt von IPDI und Acrylsäure, siehe dazu EP-A 0 916 647, Beispiel 1, und dessen Alkali- und/oder Ammoniumsalze, das Addukt von Natriumbisulfit an Buten-2-diol-1,4, Polyethersulfonat, das propoxylierte Addukt aus 2-Butendiol und NaHSO3, siehe dazu DE-A 2 446 440, Formeln I bis III. Für die Salzbildung gut geeignet sind Natrium-, Kalium-, Lithium- und Calcium-Hydroxid sowie tertiäre Amine wie Triethylamin, Dimethylcyclohexylamin und Ethyldiisopropylamin.

Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Besonders bevorzugte Komponenten c) sind solche, die über Carboxy- und/oder Carboxylat- und/oder Sulfonatgruppen verfügen.

Ganz besonders als Komponente c) bevorzugt sind die Natriumsalze der N-(2-Aminoethyl)-2-aminoethansulfonsäure und der N-(2-Aminoethyl)-2-aminoethancarbonsäure, insbesondere der N-(2-Aminoethyl)-2-aminoethansulfonsäure. Weiterhin ganz besonders bevorzugt sind die Salze der Dimethylolpropionsäure.

### Komponente d):

Als gegebenenfalls weitere, von a), b) und c) unterschiedliche Bausteine können beispielsweise Polyoxyalkylenether, die mindestens eine Hydroxy- oder Aminogruppe enthalten, eingesetzt werden. Die häufig verwendeten Polyalkylenoxidpolyetheralkohole sind in an sich bekannter Weise durch Alkoxylierung geeigneter Startermoleküle zugänglich. Für die Alkoxylierungsreaktion geeignete Alkylenoxide sind insbesondere Ethylenoxid und Propylenoxid, die einzeln oder auch zusammen bei der Alkoxylierungsreaktion eingesetzt werden können.

Weitere als Komponente d) geeignete Verbindungen sind beispielsweise Monoamine, Diamine und / oder Polyamine sowie deren Gemische.

Beispiele für Monoamine sind aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin oder 2-Propanolamin. Beispiele für Diamine sind 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclo¬hexan und Bis-(4-amino-cyclohexyl)-methan. Weiterhin kommen Adipinsaeuredihydrazid, Hydrazin bzw. Hydrazinhydrat in Frage. Weitere Beispiele sind Aminoalkohole, d. h. Verbindungen, die in einem Molekül Amino- und Hydroxylgruppen enthalten, wie z. B. 1,3-Diamino-2-propanol, N-(2-Hydroxyethyl)-ethylendiamin oder N,N-Bis(2-Hydroxyethyl)-ethylendiamin. Beispiele für Polyamine sind Diethylentriamin und Triethylentetramin.

Erfindungsgemäß bevorzugt enthält das erfindungsgemäße Polyurethan, insbesondere zur Einstellung der Molmasse, mindestens ein Monoamin und/oder mindestens ein Diamin als Komponente d).

In einer besonderen Ausführungsform der vorliegenden Erfindung enthält das erfindungsgemäße eingesetzte Polyurethan an den Enden und/oder entlang der Polymerhauptkette mindestens eine OH-Gruppe, welche weiter bevorzugt über eine aliphatische Gruppe ausgewählt aus Methylen-, Ethylen, Propylen- und/oder Butylengruppen angebunden ist. Weiter bevorzugt wird diese mindestens eine OH-Gruppe in das erfindungsgemäße Polyurethan durch Verwendung von Aminoalkoholen, d. h. Verbindungen, die in einem Molekül Amino- und Hydroxylgruppen enthalten, als Kettenabbrecher bei der Polyurethan-Synthese eingebracht Besonders bevorzugt ist dabei die Verwendung von Ethanolamin, N-Methylethanolamin, Diethanolamin oder Mischungen davon.

Bevorzugt enthalten die erfindungsgemäßen wässrigen Polyurethan-Dispersionen keine externen Emulgatoren.

In einer speziellen Ausführungsform der Erfindung enthält das mindestens eine Polyurethan einen Polyester aus Adipinsäure und Butandiol-1,4 als Komponente a), Butandiol-1,4 als Komponente a'), 1-Isocyanato-3,3,5-trimethyl-5-isocyanatomethyl-cyclohexan (IPDI) als Komponente b), das Natriumsalz der N-(2-Aminoethyl)-2-aminoethansulfonsäure als Komponente c) und Diethanolamin als Komponente d). Weiter bevorzugt ist das erfindungsgemäß eingesetzte Polyurethan aus diesen Komponenten aufgebaut, d.h. es besteht aus diesen.

Das Polyurethan enthält bevorzugt 50 bis 95 Gew.-% der Komponente a), 0 bis 10 Gew.-% der Komponente a'), 4 bis 25 Gew.-% der Komponente b), 0,5 bis 10 Gew.-% der Komponente c) und 0 bis 30 Gew.-% der Komponente d), wobei die Summe der vorhandenen Komponenten 100 Gew.-% ergibt.

In einer besonders bevorzugten Form der Erfindung enthält das Polyurethan 65 bis 92 Gew.-% der Komponente a), 0 bis 5 Gew.-% der Komponente a'), 6 bis 15 Gew.-% der Komponente b), 0,5 bis 5 Gew.-% der Komponente c) und 0 bis 25 Gew.-% der Komponente d), wobei die Summe der vorhandenen Komponenten 100 Gew.-% ergibt.

In einer ganz besonders bevorzugten Form der Erfindung enthält das Polyurethan 75 bis 92 Gew.-% der Komponente a), 0 bis 5 Gew.-% der Komponente a'), 8 bis 15 Gew.-% der Komponente b), 0,5 bis 4 Gew.-% der Komponente c), und 0 bis 15 Gew.-% der Komponente d), wobei die Summe der vorhandenen Komponenten 100 Gew.-% ergibt.

In einer insbesondere bevorzugten Form der Erfindung enthält das Polyurethan 80 bis 90 Gew.-% der Komponente a), 0 bis 3 Gew.-% der Komponente a'), 8 bis 14 Gew.-% der Komponente b), 0,5 bis 3 Gew.-% der Komponente c) und 0 bis 10 Gew.-% der Komponente d), wobei die Summe der vorhandenen Komponenten 100 Gew.-% ergibt.

Liegen die Komponenten a') und/oder d) vor, so liegen sie im Allgemeinen in einer Menge von mindestens 0,1 Gew.-% vor.

Das erfindungsgemäße mindestens ein Polyurethan ist in einer bevorzugten Ausführungsform teilkristallin oder amorph, bevorzugt mit einer Glasübergangstemperatur Tg von -65 bis 10 °C.

Die vorliegende Erfindung betrifft daher bevorzugt die erfindungsgemäße Dispersion, wobei das mindestens ein Polyurethan teilkristallin oder amorph ist, bevorzugt mit einer Glasübergangstemperatur Tg von -65 bis 10 °C, bestimmt durch DSC-Messung nach DIN 65467:1999-03.

Als teilkristallin wird das erfindungsgemäße Polyurethan bezeichnet, wenn es in der DSC-Messung nach DIN 65467:1999-03 bei einer Aufheizrate von 20 K/min einen Schmelzpeak aufweist, der einer Schmelzenthalpie > 5 J/g, bevorzugt > 10 J/g, besonders bevorzugt > 20 J/g und ganz besonders bevorzugt > 40 J/g entspricht. Der Schmelzpeak wird durch das Aufschmelzen regelmäßiger Teilstrukturen im Polymer verursacht. Die Schmelztemperatur liegt dabei bevorzugt in einem Bereich von 30 bis 80°C, besonders bevorzugt 40 bis 70 °C, ganz besonders bevorzugt 42 bis 55 °C. Ausgewertet wird dabei die erste Aufheizung, um auch langsam kristallisierende Polymere zu erfassen. Als amorph wird das erfindungsgemäße Polyurethan bezeichnet, wenn es keinen Schmelzpeak aufweist oder einen Schmelzpeak mit einer Schmelzenthalpie von höchstens 5 J/g.

Komponente A liegt in der erfindungsgemäßen Dispersion im Allgemeinen in einer Menge von60 bis 99,9 Gew.-%, bevorzugt 85 bis 99,6 Gew.-%, jeweils bezogen auf die gesamte Dispersion, vor.

### Komponente (B)

Als Komponente B) liegt in der erfindungsgemäßen wässrigen Dispersion mindestens ein Frischsol vor.

Im Rahmen der vorliegenden Erfindung wird unter "Frischsol" eine wässrige Lösung von Kieselsäure verstanden.

Kieselsäure ist im freien Zustand nicht stabil und wird daher in situ aus verschiedenen Vorstufen hergestellt, wodurch man eine verdünnte Lösung von Kieselsäure Si(OH)₄, so genanntes Frischsol, erhält, siehe dazu beispielsweise US 2,244,325 und US 3,468,813.

Im technischen Maßstab können zur Herstellung von Frischsol als Ausgangsmaterial im Allgemeinen technische Wassergläser eingesetzt werden, beispielsweise Natronwassergläser mit der Zusammensetzung Na₂O x 3,34 SiO₂. Aus ihnen werden stark alkalische Natriumsilikatlösungen hergestellt. Es können auch Kaliwassergläser eingesetzt werden.

Zur Herstellung der eingesetzten Frischsole wird bevorzugt eine alkalifreie SiO₂-Lösung verwendet, die durch Entfernung der Alkalikationen aus dem Wasserglas erzeugt wird. Eine mögliche Methode der Entalkalisierung ist die Behandlung der verdünnten Wasserglaslösungen mit Kationenaustauscherharzen in der H⁺-Form. Geeignete lonenaustauscherharze sind beispielsweise die Lewatit^{®}-Typen der Fa. Lanxess AG.

Vorzugsweise werden hierzu Wasserglaslösungen mit einem SiO₂-Gehalt unter 10 Gew. % über Austauschersäulen mit sauren Ionentauschern geleitet. Wichtig sind kurze Verweilzeiten in der Austauschzone, in welcher der pH-Wert der Lösungen 5 bis 7 beträgt, um eine Gelierung der Lösungen und eine Verkieselung des Austauscherharzes zu vermeiden.

Die anfallende Kieselsäurelösung, d.h. das erfindungsgemäß gewünschte Frischsol, ist bevorzugt bei niedrigen pH-Werten und in stark verdünnter Lösung lagerfähig.

Die vorliegende Erfindung betrifft daher bevorzugt die erfindungsgemäße Dispersion, wobei das mindestens eine Frischsol einen pH-Wert von 1,0 bis 3,5, bevorzugt 1,5 bis 3,0, besonders bevorzugt 1,7 bis 2,9, aufweist.

Das erfindungsgemäße Frischsol hat eine Feststoffkonzentration von bevorzugt 4 bis 8 Gew.-%, besonders bevorzugt 5 bis 6 Gew.-%. Hierbei liegt die Kieselsäure Si(OH)₄ im Allgemeinen im Gleichgewicht mit anderen wasserlöslichen Oligo-Silikat-Moleküle vor, siehe dazu beispielsweise Cengiz Özmentin, Jan Schlomach, Matthias Kind. Polymerisationskinetik von Kieselsäure, Chemie Ingenieur Technik 2004, No. 12, Seite 76.

Es ist erfindungsgemäß nicht bevorzugt, dass als Komponente B) SiO₂-Dispersionen auf Basis von Kieselsol, Kieselgel, pyrogener Kieselsäure oder Fällungskieselsäure eingesetzt werden.

Im Gegensatz zu dem erfindungsgemäß eingesetzten Frischsol sind Kieselsole kolloidale Lösungen von amorphem Siliciumdioxid in Wasser, die auch als Siliciumdioxidsole oder als Kieselsäuresole bezeichnet werden. Sie entstehen durch erneute Alkalisierung und durch Aufwachsen auf vorhandene Kieselsolteilchen, siehe beispielsweise DE 4033875 C2 und EP 0 572 888 A1. Durch thermische Behandlung werden sie stabilisiert und aufkonzentriert, siehe beispielsweise EP 0 569 813 B1, EP 1 905 741 oder WO 2004/007367 A1.

Unter Kieselgelen versteht der Fachmann kolloidal geformte oder ungeformte Kieselsäure von elastischer bis fester Konsistenz mit lockerer bis dichter Porenstruktur. Die Kieselsäure liegt in Form von hochkondensierter Polykieselsäure vor. Auf der Oberfläche befinden sich Siloxan und/oder Silanol-Gruppen. Die Herstellung der Kieselgele erfolgt aus Wasserglas durch Umsetzung mit Mineralsäuren.

Bei der Fällungskieselsäure wird Wasserglas mit Säure und Wasser behandelt. Dabei entstehen kolloidale Primärteilchen, die zu Agglomeraten verwachsen. Die spezifische Oberfläche liegt bei 30 bis 800 m²/g nach DIN 66131 und die Primärpartikelgröße bei 5 bis 100 nm. Die Primärpartikel von diesen als Feststoff vorliegenden Kieselsäuren sind zu Sekundäragglomeraten fest vernetzt.

Pyrogene Kieselsäure kann durch Flammenhydrolyse aus Tetrachlorsilan hergestellt. Sie besitzt eine nahezu porenfreie Oberfläche und hat eine spezifische Oberfläche von 50 bis 600 m²/g nach DIN 66131 und eine Primärpartikelgröße von 5 bis 50 nm. Die über das Lichtbogenverfahren hergestellte pyrogene Kieselsäure hat eine spezifische Oberfläche von 25 bis 300 m²/g nach DIN 66131 und eine Primärpartikelgröße von 5 bis 500 nm.

Komponente (B) liegt in der erfindungsgemäßen Dispersion im Allgemeinen in einer Menge von 0,1 bis 40 Gew.-%, bevorzugt 0,4 bis 15 Gew.-%, jeweils bezogen auf die gesamte Dispersion, vor.

### Komponente (C)

Die erfindungsgemäße wässrige Dispersion kann gegebenenfalls Additive enthalten, beispielsweise in einer Menge von 0,1 bis 30 Gew.-%, bezogen auf die gesamte Dispersion.

Als Komponente (C) können beispielsweise Weichmacher zugesetzt werden, um die entstehenden Klebnähte für den Gebrauch oder die weitere Verarbeitung weich, flexibel, dehnbar und geschmeidig zu machen.

Als Weichmacher können schwerflüchtige niedermolekulare, polare Gruppen tragende Verbindungen eingesetzt werden. Bevorzugte Weichmacher sind Di(phenoxyethyl)formal sowie schwerflüchtige Ester auf Basis von aromatischen Carbonsäuren wie z.B. Phthalsäure, Isophthalsäure, Terepthalsäure, Benzoesäure, Trimellithsäure; aliphatischen Carbonsäuren wie z.B. Maleinsäure, Fumarsäure, Bernsteinsäure, Essigsäure, Propionsäure, Buttersäure, Adipinsäure, Azelainsäure, Sebacinsäure, Zitronensäure, Cyclohexandicarbonsäure, oder Fettsäuren wie z.B. Ölsäure, Rizinolsäure oder Stearinsäure; sowie Phosphorsäure-, Sulfon- oder Alkylsulfonsäureester. Auch epoxidierte Pflanzenöle wie z.B. epoxidiertes Leinöl und epoxidiertes Sojaöl sind bevorzugt. Besonders bevorzugt werden Di(phenoxyethyl)formal, Dibutylterephthalat und Alkylsulfonsäureester des Phenols eingesetzt, ganz besonders bevorzugt sind Di(phenoxyethyl)formal und Dibutylterephthalat. In einer ganz besonders bevorzugten Ausführungsform der vorliegenden Erfindung wird Di(phenoxyethyl)formal als Weichmacher (Komponente C) eingesetzt.

In der erfindungsgemäßen Dispersion liegt der mindestens ein Weichmacher im Allgemeinen in einer Menge von 0,1 bis 30 Gew.-%, bevorzugt 15 bis 25 Gew.-%, jeweils bezogen auf die gesamte Dispersion, vor.

Als Komponente (C) können weiterhin Tackifierharze zugesetzt werden, um die Adhäsionsfähigkeit des Klebstoffes zu erhöhen. Geeignete Tackifierharze sind sowohl Naturals auch synthetische Harze, z.B. aliphatische, aromatisch modifizierte, aromatische und hydrierte Kohlenwasserstoffharze, Terpenharze, modifizierte Terpenharze und Terpenphenolharze, oder Baumharzderivate wie z.B. Kollophoniumharze, modifizierte Kollophoniumharze wie z.B. Harzester auf Basis Kollophonium ("rosin ester"), Balsamharzderivate ("gum rosin") und Tallöl-Derivate ("tall oil rosin"). Selbstverständlich können die Tackifierharze einzeln oder als Mischungen eingesetzt werden.

Bevorzugt werden als Tackifierharze Kollophoniumharze und modifizierte Kollophoniumharze eingesetzt. Besonders bevorzugt werden Harzester auf Basis Kollophonium eingesetzt. Die Tackifier können als 100%ige Harze oder als Dispersion in den erfindungsgemäßen wässrigen Dispersionen eingesetzt werden, sofern eine Verträglichkeit, insbesondere eine Stabilität gegen Phasentrennung, gegeben ist.

In einer besonders bevorzugten Ausführung der der vorliegenden Erfindung werden als Komponente C) wässrige Dispersionen von Kollophoniumharzestern ("rosin ester dispersions") eingesetzt.

In der erfindungsgemäßen Dispersion liegt das mindestens eine Tackifierharz im Allgemeinen in einer Menge von 0,1 bis 30 Gew.-%, bevorzugt 15 bis 25 Gew.-%, jeweils bezogen auf die gesamte Dispersion, vor.

Weiterhin kann der erfindungsgemäßen wässrigen Dispersion als Komponente (C) mindestens ein Flammschutzmittel zugesetzt werden, um die Brandsicherheit der daraus hergestellten Formkörper zu erhöhen. Als geeignete Flammschutzmittel seien beispielhaft organische Phosphor- und Stickstoffverbindungen, Organochlor- und Organobrom-Verbindungen, sowie anorganische Flammschutzmittel wie z.B. Antimontrioxid, Aluminiumhydroxid oder Aluminiumoxid, genannt. Bevorzugt wird im Rahmen der vorliegenden Erfindung Aluminiumhydroxid als Flammschutzmittel in der wässrigen Dispersion eingesetzt, besonders bevorzugt wird dabei Aluminiumhydroxid mit einer mittleren Partikelgröße d(50) von 1,0 bis 3,9 µm, insbesondere 1,7 bis 2,1 µm, eingesetzt.

In der erfindungsgemäßen Dispersion liegt das mindestens eine Flammschutzmittel im Allgemeinen in einer Menge von 0,1 bis 30 Gew.-%, bevorzugt 1,5 bis 15 Gew.-%, jeweils bezogen auf die gesamte Dispersion, vor.

In einer weiteren, jedoch nicht bevorzugten Ausführungsform, können zur Konservierung auch Fungizide als Komponente (C) zugesetzt werden. Diese kommen bevorzugt in Mengen von 0,02 bis 0,5 Gew. -%, bezogen auf die gesamte Dispersion, zum Einsatz. Geeignete Fungizide sind beispielsweise Phenol-und Kresolderivate oder zinnorganische Verbindungen.

Weitere mögliche weitere Additive (Komponente C) sind beispielsweise Pigmente, Flammschutzmittel, Antioxidantien, Dispergierhilfsmittel, Emulgatoren, Netzmittel, Haftvermittler und/oder Entschäumer.

Des Weiteren können Alterungsmittel, Oxidationsmittel und/oder UV-Schutzmittel als weitere Additive eingesetzt werden, insbesondere auf der Basis von oligofunktionellen, sekundären, aromatischen Aminen oder oligofunktionellen, substituierten Phenolen, wie Produkte vom Typ 6-PPD (N-(1,3-Dimethylbutyl)-N'-phenyl-p-phenylendiamin, beispielsweise Vulkanox^{®} der Lanxess Deutschland GmbH, DTPD, DDA, BPH, BHT oder Verbindungen auf Basis von HALS (hindered amine light stabilisers), Benzotriazolen, Oxalaniliden, Hydroxybezophenonen und/oder Hydroxyphenyl-S-triazine. Besonders wirksam ist Rhenofit^{®} DDA 50 EM, ein Diphenylamin-Derivat der Firma Rhein Chemie.

Typischerweise werden entsprechende Alterungs-, Oxidations- und/oder UV-Schutzmittel in emulgierter Form als wässrige Dispersion eingebracht.

In der erfindungsgemäßen Dispersion liegen Alterungs-, Oxidations- und/oder UV-Schutzmittel im Allgemeinen in einer Menge von 0,1 bis 2,5 Gew.-%, bevorzugt 0,5 bis 1,5 Gew.-%, besonders bevorzugt 0,75 bis 1,25 Gew.-%, jeweils bezogen auf die gesamte Dispersion, vor.

In der erfindungsgemäßen Dispersion liegt Komponente (C) im Allgemeinen in einer Menge von 0,1 bis 30 Gew.-%, bevorzugt 15 bis 25 Gew.-%, jeweils bezogen auf die gesamte Dispersion, vor.

Die erfindungsgemäße wässrige Dispersion kann beispielsweise in dem Thermoaktivierverfahren eingesetzt werden. Dieses ist dem Fachmann an sich bekannt.

Bevorzugt wird die erfindungsgemäße wässrige Dispersion zur Verklebung nach dem Sprühkoagulationsverfahren eingesetzt. Bei diesem Verfahren werden die wässrigen Klebstoffformulierungen sowie ein Koagulationsmittel separat in einer 2K-Sprühpistole gefördert und im Sprühstrahl vermischt.

Als Koagulationsmittel kommen dabei wässrige Lösungen von Salzen, bevorzugt von Metallen der ersten, zweiten und dritten Hauptgruppe des Periodensystems, in Frage, insbesondere solche, die eine gute Wasserlöslichkeit aufweisen. Bevorzugt werden Salze auf Basis zwei- oder dreiwertiger Kationen eingesetzt. Besonders bevorzugt werden Calciumchlorid, Zinksulfat oder Aluminiumsulfat eingesetzt. Ganz besonders bevorzugt wird Calciumchlorid eingesetzt.

Es können auch Mischungen verschiedener Salze gemäß obiger Beschreibung als wässrige Lösung eingesetzt werden.

Die Konzentration der als Koagulationsmittel geeigneten wässrigen Salzlösungen beträgt 1 bis 20 Gew.-%, bevorzugt 2 bis 10 Gew.-%, und besonders bevorzugt 3 bis 4 Gew.-%, jeweils bezogen auf die wässrige Salzlösung.

Der Anteil der wässrigen Lösung des Koagulationsmittels beträgt bevorzugt 0,1 bis 50 Gew.-%, bevorzugt 1 bis 30 Gew.-%, besonders bevorzugt 8 bis 20 Gew.-% und ganz besonders bevorzugt 12 bis 18 Gew.-%, jeweils bezogen auf die Summe der erfindungsgemäßen wässrigen Dispersion und Koagulationsmittellösung.

Die vorliegende Erfindung betrifft daher bevorzugt die erfindungsgemäße, wässrige Dispersion, enthaltend
A) 60 bis 99,9 Gew.-%, bevorzugt 85 bis 99,6 Gew.-% des mindestens ein Polyurethans, welches anionisch hydrophiliert ist,
B) 0,1 bis 40 Gew.-%, bevorzugt 0,2 bis 30 Gew.-%, besonders bevorzugt 0,4 bis 15 Gew.-%, des mindestens einen Frischsols,
C) 0,1 bis 30 Gew.-% weitere Additive,
jeweils bezogen auf das Gesamtgewicht der wässrigen Dispersion, wobei die Summe der vorliegenden Komponenten jeweils 100 Gew.-% ergibt.

Die erfindungsgemäße wässrige Dispersion weist, insbesondere für den Einsatz in der Sprühapplikation, bevorzugt eine Viskosität von 500 bis 7.000 5 mPa·s, besonders bevorzugt 1500 bis 6.000 mPa·s, jeweils bestimmt nach DIN ISO 2555: 2018-09 mittels eines Brookfield Rotationsviskosimeters, auf.

In einer bevorzugten Ausführungsform der vorliegenden Erfindung wird die erfindungsgemäße wässrige Dispersion hergestellt, indem eine mindestens ein Polyurethan enthaltende wässrige Dispersion mit dem mindestens einen Frischsol, und den gegebenenfalls vorhandenen weiteren Additiven vermischt werden.

Die vorliegende Erfindung betrifft daher auch ein Verfahren zur Herstellung der erfindungsgemäßen wässrigen Dispersion, wobei eine mindestens ein Polyurethan enthaltende wässrige Dispersion mit einer wässrigen Lösung der Kieselsäure, d.h. dem Frischsol, und gegebenenfalls weiteren Additiven vermischt werden. Hierfür geeignete Verfahrensparameter sind dem Fachmann an sich bekannt, beispielsweise erfolgt die Herstellung bei einer Temperatur von 20 bis 28 °C, weiter bevorzugt in einem Rührreaktor.

Die vorliegende Erfindung betrifft auch die Verwendung der erfindungsgemäßen Dispersion zur Herstellung einer Klebstoffzusammensetzung. Komponenten, die neben der erfindungsgemäßen wässrigen Dispersion in der erfindungsgemäßen Klebstoffzusammensetzung enthalten sein können, sind dem Fachmann an sich bekannt und/oder weiter oben bereits beschrieben. Zusätzliche Additive für eine Klebstoffzusammensetzung können ausgewählt sein aus wasserbasierten Acrylharzen, beispielsweise Acronal^{®} der BASF, mikrofibrillierter Cellulose, beispielsweise Exilva^{®} von Borregaard, und/oder anderen dem Fachmann bekannten Verdickersystemen.

Erfindungsgemäß bevorzugt entspricht die erfindungsgemäße wässrige Dispersion die erfindungsgemäße Klebstoffzusammensetzung, d.h. die erfindungsgemäße Klebstoffzusammensetzung besteht aus der erfindungsgemäßen wässrigen Dispersion.

Die vorliegende Erfindung betrifft auch eine Klebstoffzusammensetzung, mindestens enthaltend eine erfindungsgemäße wässrige Dispersion, bevorzugt bestehend aus der erfindungsgemäßen wässrigen Dispersion.

Die vorliegende Erfindung betrifft des Weiteren auch einen Klebstoffverbund, enthaltend mindestens ein mit einer erfindungsgemäßen Klebstoffzusammensetzung verklebtes Substrat.

Insbesondere betrifft die vorliegende Erfindung den erfindungsgemäßen Klebstoffverbund, wobei das mindestens ein Substrat ausgewählt ist aus der Gruppe bestehend aus Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen und Kombinationen davon. In dem erfindungsgemäßen Klebstoffverbund sind die genannten Substrate dabei bevorzugt jeweils miteinander und/oder an porige Substrate, bevorzugt mit einer Dichte von weniger als 1 kg/Liter, angebunden.

Die vorliegende Erfindung betrifft auch ein Verfahren zur Herstellung eines Klebstoffverbundes, wobei mindestens ein Substrat mit der erfindungsgemäßen Klebstoffzusammensetzung verklebt wird.

Die erfindungsgemäße Klebstoffzusammensetzung, insbesondere die erfindungsgemäße wässrige Dispersion, kann dabei im Allgemeinen mittels aller gängigen Applikationsformen auf das mindestens eine Substrat aufgebracht werden, insbesondere durch Streichen, Rollen, Spritzen und/oder Sprühen, insbesondere durch Sprühauftrag, Pinselauftrag oder Walzenauftrag. Bevorzugt erfolgt der Auftrag der erfindungsgemäßen Klebstoffzusammensetzung mittels Sprühapplikation.

Erfindungsgemäß geeignete Substrate sind oben bereits genannt.

Insbesondere betrifft die vorliegende Erfindung das erfindungsgemäße Verfahren zur Herstellung einer Nass-in-Nass-Verklebung, wobei eine erfindungsgemäße Klebstoffzusammensetzung enthaltend die erfindungsgemäße wässrige Dispersion zum Beispiel mittels Sprühauftrag, Walzenauftrag oder Pinselauftrag auf ein Schaumstoff-Substrat appliziert wird und nach einer Ablüftungszeit von < 5 min, bevorzugt < 2 min, besonders bevorzugt ≤ 1 min, eine Nassklebung vor Filmbildung erzeugt wird.

Die vorliegende Erfindung betrifft auch die Verwendung der erfindungsgemäßen wässrigen Dispersion zur Verklebung von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen und Kombinationen davon. Erfindungsgemäß werden die genannten Substrate dabei bevorzugt jeweils miteinander und/oder an porige Substrate, bevorzugt mit einer Dichte von weniger als 1 kg/Liter, angebunden.

Die vorliegende Erfindung betrifft auch die Verwendung eines Frischsols zum Erzielen einer Verdickerwirkung in einer wässrigen Polyurethan-Dispersion. Bevorzugt steigt die Viskosität bei Zugabe des Frischsols in einer Menge von 5 bis 40 Gew.-%, bezogen auf die entstehende wässrige Polyurethan-Dispersion, dabei um 400 bis > 50.000 mPa·s, bevorzugt 1.000 bis 4.500 mPa·s, an.

Die Erfindung soll anhand der nachfolgenden Beispiele näher erläutert werden, ohne sie einzuschränken.

### Beispiele

Tabelle 1 zeigt die in den erfindungsgemäßen Beispielen und/oder Vergleichsbeispielen eingesetzten Komponenten.

**Tabelle 1**

| **Typ** | **Herkunft/ Handelsname** | **Eigenschaften/Struktur** | **Eingesetzte Form** |
|---|---|---|---|
| Polyurethandispersion | aus Beispiel 1 | anionisch hydrophiliertes, teilkristallines Polyurethan | 40 gew.-%ige, wässrige Dispersion |
| Polyurethandispersion | Dispercoll^{®} U53 | anionisch hydrophiliertes, teilkristallines Polyurethan | 40 gew.-%ige, wässrige Dispersion |
| Polyurethandispersion | Dispercoll^{®} U42 | anionisch hydrophiliertes, amorphes Polyurethan | 50 gew.-%ige, wässrige Dispersion |
| Polyurethandispersion | Dispercoll^{®} U66 | anionisch hydrophiliertes, teilkristallines Polyurethan | 48 gew.-%ige, wässrige Dispersion |
| Polyurethandispersion | Baybond^{®} 406 | nichtionisches Polyurethan | 35 gew.-%ige, wässrige Dispersion |
| Polyurethandispersion | Baybond^{®} 1810-1 | nichtionisches Polyurethan | 50 gew.-%ige, wässrige Dispersion |
| Frischsol | Levasil^{®} CS6 - 3 P | Wässrige Lösung von Kieselsäure und Oligokieselsäuren | 6 gew.-%ige, wässrige Lösung |
| Kieselsol | Levasil^{®} CS - 350 P | Wässrige, kolloidale Lösung von SiO₂, Al-modifiziert | 15 gew.-%ige, wässrige, kolloidale Lösung |
| Kieselsol | Dispercoll^{®} S 3030 | Wässrige, kolloidale Lösung von SiO₂ | 30 gew.-%ige, wässrige, kolloidale Lösung |
| Verdicker | Borchi Gel^{®} A LA | Polyacrylat, Viskosität 25000 bis 60000 mPa·s | 5 gew.-%ige, wässrige Dispersion |
| Weichmacher | Benzoflex 9-88 | Mischung aus Dipropylenglykol-dibenzoat (CAS-Nr. 2713831-4), und ggf. weiteren Benzoesäureestern | Viskosität bei 25 °C ca. 105 mPa·s |

### Messmethoden

### Auftrag der Klebstoffformulierung und Beurteilung

### 1) Sprühverfahren

Es wurde mit einer Standard-Spritzpistole für Zweikomponenten-Dispersionsklebstoffe (PILOT III 2K der Fa. Walther Pilot) appliziert. Dabei wurden der Klebstoff und das Koagulationsmittel CaCl₂ (3 Gew.-%ige Lösung in Wasser) separat in die Sprühpistole gefördert und im Sprühstrahl vermischt, so dass der Klebstoff koagulierte. Da die Vermischung erst im Sprühstrahl stattfand, war keine Topfzeit zu beachten. Es wurde das Verhältnis 86 Gew.-% Klebstoffdispersion zu 14 Gew.-% CaCl₂-Lösung gewählt.

Die Mengenverhältnisse und das Auftragsgewicht konnten durch Rückwiegen der Vorlagebehälter sowie der Substrate ermittelt werden.

Folgende Einstellungen der Spritzpistole kamen zum Einsatz:
Klebstoffkomponente: Förderdruck 1,3 bar
Koagulationskomponente: Förderdruck 0,3 bar
Zerstäuberluftdruck: 2,8 bar
Bohrung (Düse) f. Klebstoffkomponente 1,0 mm
Bohrung (Düse) f. Koagulationskomponente 0,4 mm
Auftragsgewichte: 100 bis 200 g/m² (nass)

### 2) Beschichtung mit dem Pinsel

Die Klebstoffformulierung wurde mittels Pinsel beidseitig auf den PU-Schaumkörper aufgetragen.

### 3) Prüfkörper

Es wurden PU-Schaumkörper der Firma stn/schaumstoff-technik-Nürnberg GmbH verwendet. Typ ST 5540, Abmessungen der Prüfkörper: 101 mm × 49 mm × 30 mm, Materialbasis PUR, Farbe weiß, Bruttogewicht 40 kg/m², Nettorohdichte 38 kg/m³ gemäß ISO-845: 2009-10, Stauchhärte bei 40% 5,5 (kPa) gemäß DIN EN ISO 3386: 2015-10, Zugfestigkeit > 120 kpa gemäß DIN EN ISO 1798: 2008-04, Bruchdehnung > 110% gemäß ISO-1798: 2008-04, Druckverformungsrest < 4 gemäß DIN EN ISO-1856: 2018-11 (50%/70 °C/22h)

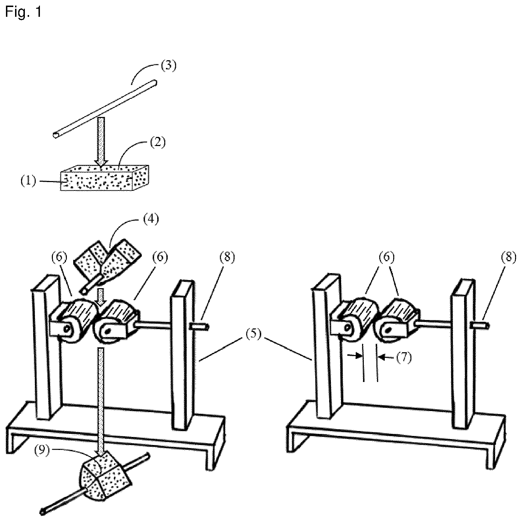

### 4) Bestimmung der Anfangsfestigkeit (siehe auch Figur 1)

Als Prüfmaterial wurden die unter 3) genannten Prüfkörper verwendet. Zur Beurteilung der Anfangsfestigkeit wurden die Probekörper unmittelbar nach dem Klebstoff-Auftrag auf die Oberseite (2) der Schaumstoffkörper (1) mittels Sprühkoagulationsverfahren (Aufwandmenge 130 bis 150 g/m² nass) mit einem Holzstab (3) (Vierkant 7 x 7 mm)) in der Mitte geknickt (4) und mittels der Prüfvorrichtung (5) durch 2 Stahlrollen (6) (Durchmesser jeweils 40 mm, Länge jeweils 64 mm) geführt, deren tangentialer Abstand (7) zuvor mit der Gewindespindel (8) auf 10 mm eingestellt wurde.

### 5) Beurteilung der Anfangsfestigkeit

Eine sofortige Anfangsfestigkeit war vorhanden, wenn sich der Probekörper bzw. die Klebnaht (9) trotz der im Probekörper vorhandenen Rückstellkräfte nicht mehr öffnete.

Zur besseren Quantifizierung der Anfangsfestigkeit wurde diese wie folgt bewertet:
Die Spannung wurde nach dem einmaligen Durchziehen des Prüfkörpers durch den Spalt zwischen den beiden Walzen sofort gehalten. Wurde der Schaumkörper nach 120 s beidseitig auseinandergezogen und es erfolgte Materialausriss, bzw. ließ er sich nur mit sehr hohem Kraftaufwand wieder öffnen, dann erhielt die Anfangsfestigkeit die Bewertung "1".

Die Spannung wurde nach dem einmaligen Durchziehen des Prüfkörpers durch den Spalt zwischen den beiden Walzen sofort gehalten. Ließ sich der Schaumkörper nach 120 s bei beidseitigem Auseinanderziehen ohne hohen Kraftaufwand wieder öffnen, dann wurde die Anfangsfestigkeit mit "2" bewertet.

Der Prüfkörper öffnete sich nach dem einmaligen Durchziehen des Prüfkörpers durch den Spalt zwischen den beiden Walzen. Erst durch Wiederholung bzw. per Handdruck (1x ca. 1 s angedrückt) blieb der Prüfkörper geschlossen, Bewertung "3".

Die Spannung wurde selbst bei mehrmaligem Andrücken (per Walzen und manuell) nicht gehalten, Bewertung "4".

### Bestimmung der Viskosität

Die Viskosität der Dispersionen wurde mittels Brookfield Viskosimeter nach DIN ISO 2555: 2018-09 ermittelt. Die Spindel wurde dazu vorsichtig, möglichst ohne Luftblasenbildung, in die zu messende Dispersion eingetaucht. Dazu wurde die Flasche, die die zu untersuchende Probe enthielt, auf eine Hebebühne gestellt und vorerst soweit hochgefahren, dass die Spindel an der Antriebsachse befestigt werden konnte, ohne dass der Spindelkörper aus der Dispersion auftaucht. Die Hebebühne wurde weiter hochgefahren, bis die Spindel bis zur Eintauchrille am Spindelschaft in die Probe eintauchte. Der Motor wurde eingeschaltet. Sobald sich die LED-Anzeige des Messwertes stabilisiert hatte, wurde der Messwert abgelesen.

Abhängig vom Viskositätsbereich wurde mit folgt verfahren:
Viskositätsbereich < 1.000 mPa·s: Messung mit Spindel #2 bei 60 U/min.
Viskositätsbereich 1.000 bis 2.500 mPa·s: Messung mit Spindel #2 bei 12 U/min.
Viskositätsbereich 2.500 bis 10.000 mPa·s: Messung mit Spindel #3 bei 12 U/min.

### Bestimmung des pH-Wertes

In die zu prüfende Dispersion bzw. Lösung wurde eine Einstab-Messelektrode (Metrohm pH Meter) eingetaucht.

### Wärmestand

Zur Bestimmung des Wärmestandes von der Holz/PVC Klebeverbindungen wurde wie folgt vorgegangen:

### Prüfkörper

Die Untersuchungen wurden an Buchenholz/Hart-PVC-Kaschierfolie durchgeführt. Die Hart-PVC-Kaschierfolie wurde von der Firma Benecke-Kaliko AG, Beneckeallee 40, D-30419 Hannover bezogen. Typ: Renolit nature, Abmessungen 50 mm x 250 mm x 0,4 mm. Die Folie wurde in die entsprechenden Prüfkörperbreite (50 mm) und Prüfkörperlänge (210 mm) geschnitten.

Das Buchenholz wurde von der Firma Rocholl GmbH, Alter Gartenweg 6-8, 69436 Schönbrunn-Moosbrunn bezogen. Typ Buchenholz, gehobelt und gelocht, Abmessungen 50 mm x 140 mm x 4,0 mm. Die Klebefläche beträgt 50 mm x 110 mm.

Der Klebstoffauftrag erfolgte auf einer Klebfläche von 50 mm x 110 mm als zweifacher Klebstoffauftrag mit Pinsel nur auf dem Buchenholz (1. Auftrag 30 min., 2. Auftrag 60 min.). Die Trocknung erfolgte bei Raumtemperatur und 50 bis 75% Luftfeuchtigkeit im Paternoster. Nach der Trocknungszeit wurden die beiden Prüfkörper so übereinandergelegt, dass die nicht strukturierte Seite der Hart-PVC-Kaschierfolie auf der mit Klebstoff beschichteten Seite des Buchenholzprüfkörpers bündig anlag. Dieser Verbund wurde nun mit der Buchenholzseite nach unten in die Membranpresse gelegt und unter folgenden Standardbedingungen gepresst:
Temperatureinstellung der Presse 103 °C (entsprechend einer Fugentemperatur von 90 °C), Druck 4 bar, Pressdauer 10 sec.

Das überstehende Ende der Hart-PVC- Kaschierfolie wurde mittig gelocht.

Nach 4 bis 7 Tagen Lagerung bei Raumtemperatur wurden die Prüfkörper im Wärmestand-Test untersucht. Dazu wurde das freie Ende des Buchenprüfkörpers zunächst in den Klemmen der Messplätze des Wärmestandschranks eingespannt. Das Gewicht (500 g) wurde an das überstehende Ende der Hart-PVC- Kaschierfolie befestigt und belastet. Dadurch wurde die Klebeverbindung im 180°-Winkel gehalten. Der Wärmestandschrank wurde zunächst auf 50 °C aufgeheizt und 60 min. bei 50 °C gehalten. Anschließend wurde die Temperatur im Wärmestandschrank in Temperaturstufen um jeweils 10 °C für 60 min erhöht. Die Endtemperatur lag bei 120 °C. Die Zeit bis zum vollständigen Abschälen der PVC-Folie wird automatisch erfasst.

### Herstellung der Klebstoffformulierungen

Die Versuche wurden jeweils in einem 900 ml Polybecher mit VISCO JET^{®} Rührer bei einer Rührgeschwindigkeit von ca. 600U/Min. und einer Rührzeit von 15 Minuten hergestellt. Die Polyurethan-Komponente wird vorgelegt, danach wurden unter Rühren die weiteren Komponenten Levasil oder Dispercoll S zugegeben. Bei der Zugabe von Borchi Gel^{®} A LA wurde dieser zuvor mit einem Mengenverhältnis (1:1) mit Wasser verdünnt.

Nach der Nachrührzeit von 15 Minuten wurden der pH-Wert und die Viskosität gemessen. Die Viskosität wird mit Spindel #63 bei 12 Umdrehungen in der Minute gemessen. Es wurden der höchste Sofortwert und der ca. 15 Sekunden anhaltende Viskositätswert dokumentiert. Anschließend wird der pH-Wert nach DIN ISO 976: 2016-12 ermittelt.

Die Versuche mit "Frischsol" wurden ausschließlich mit frischem Frischsol (nicht älter als 12 Stunden) durchgeführt.

### Beispiel 1: Herstellung einer wässrigen Polyurethan-Dispersion

### Einsatzstoffe:

| | |
|---|---|
| Polyesterpolyol I: | Polyesterdiol aus 1,4-Butandiol und Adipinsäure, OH-Z = 50 |
| Desmodur^{®} H: | Hexamethylendiisocyanat-1,6 (Covestro Deutschland AG, Lever kusen/Deutschland) |
| Desmodur^{®} I: | Isophorondiisocyanat (Covestro Deutschland AG, Lever kusen/Deutschland) |

450 g Polyesterpolyol I wurden 1 Stunde bei 110 °C und 15 mbar entwässert. Bei 80 °C wurden 30,11 g Desmodur^{®} H und anschließend 20,14 g Desmodur^{®} I zugegeben. Die Mischung wird bei 80 bis 90 °C gerührt bis ein konstanter Isocyanatgehalt von 1,15 Gew.-% erreicht wurde. Das Reaktionsgemisch wurde in 750 g Aceton gelöst und dabei auf 48 °C abgekühlt. In die homogene Lösung wurde eine Lösung aus 5,95 g Natriumsalz der N-(2-Aminoethyl)-2-aminoethansulfonsäure und 2,57 g Diethanolamin in 65 g Wasser unter kräftigem Rühren gegeben. Nach 30 Minuten wurde durch Zugabe von 700 g Wasser dispergiert. Nach destillativer Abtrennung des Acetons wurde eine wässrige Polyurethan-Dispersion mit einen Feststoffgehalt von 40,0 Gew.-% erhalten. Das enthaltene Polymer ist nach der Trocknung teilkristallin mit einer Schmelztemperatur von 48 °C und einer Schmelzenthalpie von 50,4 J/g.

### Herstellung von Klebstoffformulierungen

Mit den in Tabelle 1 genannten Komponenten werden die in den Tabellen 2 bis genannten Formulierungen hergestellt und bezüglich Viskosität, pH-Wert, Wärmestand und Lagerfähigkeit untersucht.

**Tabelle 2: Einsatz von Frischsol in wässrigen Dispersionen enthaltend anionisch hydrophilierte Polyurethane**

| **Beispiel-Nr.** | **2** | **3** | **4** | **5** | **6** | **7** | **8** | **9** | **10** |
|---|---|---|---|---|---|---|---|---|---|
| Polyurethan aus Beispiel 1 | 95 | 90 | 80 | 70 | 60 | 76 | 72 | 64 | 56 |
| Dispercoll^{®} U42 | - | - | - | - | - | 19 | 18 | 16 | 14 |
| Levasil^{®} CS 6-3P | 5 | 10 | 20 | 30 | 40 | 5 | 10 | 20 | 30 |
| pH-Wert | 6,9 | 6,8 | 6,6 | 6,2 | 6,0 | 7,6 | 7,3 | 6,6 | 6,5 |
| Viskosität [mPa·s] | 1.230 | 3.770 | 19.000 | >50.000 | Paste | 330 | 2.200 | 9.000 | Paste |

| | | | | | | | | | |
|---|---|---|---|---|---|---|---|---|---|
| Alle Angaben in Gew.-%, sofern nicht anders angegeben | | | | | | | | | |

Bei den erfindungsgemäßen Versuchen 2 bis 10 wurden Klebstoffformulierungen enthaltend Frischsol und anionisch hydrophiliertes Polyurethan hergestellt und gelagert. Es zeigte sich, dass das Frischsol unter diesen Bedingungen nicht unter Gelbildung zu einer Polykieselsäure kondensierte, sondern mit dem Polyurethan interagierte und die Viskosität der Formulierung anstieg.

**Tabelle 3: Einsatz von Frischsol in wässrigen Dispersionen enthaltend anionisch hydrophilierte Polyurethane**

| **Beispiel-Nr.** | **11** | **12** | **13** | **14** | **15** | **16** | **17** | **18** | **19** | **20** | **21** | **22** | **23** | **24** | **25** |
|---|---|---|---|---|---|---|---|---|---|---|---|---|---|---|---|
| Polyurethan aus Beispiel 1 | 95 | 90 | 85 | - | - | - | - | - | - | 76 | 72 | 68 | - | - | - |
| Dispercoll^{®} U53 | - | - | - | 95 | 90 | 85 | - | - | - | - | - | - | - | - | - |
| Dispercoll^{®} U42 | - | - | - | - | - | - | 95 | 90 | 85 | 19 | 18 | 17 | - | - | - |
| Dispercoll^{®} U66 | - | - | - | - | - | - | - | - | - | - | - | - | 95 | 90 | 85 |
| Levasil^{®} CS 6-3P | 5 | 10 | 15 | 5 | 10 | 15 | 5 | 10 | 15 | 5 | 10 | 15 | 5 | 10 | 15 |
| Viskosität [mPa·s] | 470 | 4.000 | 8.000 | 1.200 | 1.800 | 3.600 | 2.290 | 6.700 | 20.000 | 260 | 2.500 | 6.000 | 390 | 930 | 4.790 |
| pH-Wert | 6,5 | 6,2 | 6,1 | 6,7 | 6,7 | 6,6 | 7,5 | 7,3 | 7,2 | 7,5 | 7,2 | 6,9 | 6,3 | 6,1 | 6,1 |

| | | | | | | | | | | | | | | | |
|---|---|---|---|---|---|---|---|---|---|---|---|---|---|---|---|
| Alle Angaben in Gew.-%, sofern nicht anders angegeben | | | | | | | | | | | | | | | |

**Tabelle 4: Einsatz von Frischsol in wässrigen Dispersionen enthaltend nichtionische Polyurethane**

| **Beispiel-Nr.** | **V26** | **V27** | **V28** | **V29** | **V30** | **V31** |
|---|---|---|---|---|---|---|
| Baybond^{®} PU 406 | 95 | 90 | 85 | - | - | - |
| Baybond^{®} PU 1810-1 | - | - | - | 95 | 90 | 85 |
| Levasil^{®} CS 6-3P | 5 | 10 | 15 | 5 | 10 | 15 |
| Viskosität [mPa·s] | 33 | 25 | 20 | 29 | 23 | 23 |
| pH-Wert | 7,7 | 7,6 | 7,4 | 6,8 | 6,5 | 6,6 |

| | | | | | | |
|---|---|---|---|---|---|---|
| Alle Angaben in Gew.-%, sofern nicht anders angegeben V Vergleichsversuch | | | | | | |

Bei der Verwendung von Frischsol in Dispersionen von nichtionischen Polyurethanen kann kein Viskositätsanstieg beobachtet werden.

**Tabelle 5: Einsatz von Kieselsolen in Polyurethandispersionen**

| **Beispiel-Nr.** | **V32** | **V33** | **V34** | **V35** | **V36** | **V37** | **V38** | **V39** | **V40** | **V41** | **V42** | **V43** | **V44** | **V45** |
|---|---|---|---|---|---|---|---|---|---|---|---|---|---|---|
| Polyurethan aus Beispiel 1 | 95,74 | - | - | 76,59 | - | - | - | 97,83 | - | - | - | - | 78,26 | - |
| Dispercoll^{®} U53 | - | 93,41 | - | - | - | - | - | - | 96,59 | - | - | - | - | - |
| Dispercoll^{®} U42 | - | - | 97,94 | 19,15 | - | - | - | - | - | 98,96 | - | - | 19,57 | - |
| Dispercoll^{®} U 66 | - | - | - | - | 93,41 | - | - | - | - | - | 96,59 | - | - | - |
| Baybond^{®} PU 406 | - | - | - | - | - | 93,41 | - | - | - | - | - | 96,59 | - | - |
| Baybond^{®} PU 1810-1 | - | - | - | - | - | - | 93,41 | - | - | - | - | - | - | 96,59 |
| Dispercoll^{®} S 3030 | - | - | - | - | - | - | - | 2,17 | 3,41 | 1,04 | 3,41 | 3,41 | 2,17 | 3,41 |
| Levasil^{®} CS 15-350 P | 4,26 | 6,59 | 2,06 | 4,26 | 6,59 | 6,59 | 6,59 | - | - | - | - | - | - | - |
| Viskosität [mPa·s] | 27 | 21 | 40 | 23 | 29 | 97 | 44 | 41 | 38 | 93 | 68 | 250 | 55 | 232 |
| pH-Wert | 7,1 | 8,2 | 7,9 | 8,2 | 8,4 | 8,4 | 7,5 | 7,4 | 8,7 | 8,3 | 8,7 | 8,9 | 8,5 | 7,9 |

| | | | | | | | | | | | | | | |
|---|---|---|---|---|---|---|---|---|---|---|---|---|---|---|
| Alle Angaben in Gew.-%, sofern nicht anders angegeben V Vergleichsversuch | | | | | | | | | | | | | | |

Im Gegensatz zu Frischsol zeigten Kieselsole keinen verdickenden Effekt in Polyurethandispersionen.

**Tabelle 6: Langzeitlagerstabilität von wässrigen Formulierungen enthaltend Frischsol und anionisch hydrophilierte Polyurethane (Wiederholungsversuche)**

| **Beispiel-Nr.** | **46** | **47** | **48** | **49** | **50** | **51** |
|---|---|---|---|---|---|---|
| Polyurethan aus Beispiel 1 | 95 | 90 | 85 | 76 | 72 | 68 |
| Dispercoll^{®} U 42 | - | - | - | 19 | 18 | 17 |
| Levasil^{®} CS 6-P3 | 5 | 10 | 15 | 5 | 10 | 15 |
| Viskosität [mPa·s] | 470 | 4.000 | 8.000 | 260 | 2.500 | 6.000 |
| pH-Wert | 6,5 | 6,2 | 6,1 | 7,5 | 7,2 | 6,9 |
| Viskosität nach 2 Mon. [mPa·s] | 420 | 3.200 | 5.800 | 240 | 2.400 | 5.100 |
| pH-Wert nach 2 Mon. | 6,3 | 6,2 | 6,0 | 7,5 | 7,1 | 6,9 |
| Viskosität nach 4 Mon. [mPa·s] | 380 | 2.800 | 6.200 | 210 | 2.500 | 4.700 |
| pH-Wert nach 4 Mon. | 6,3 | 6,1 | 5,9 | 7,1 | 7,0 | 6,8 |

| | | | | | | |
|---|---|---|---|---|---|---|
| Alle Angaben in Gew.-%, sofern nicht anders angegeben. | | | | | | |

Wässrige Dispersionen enthaltend Frischsol und anionisch hydrophilierte Polyurethane waren über eine lange Lagerzeit bezüglich pH-Wert und Viskosität stabil. Es erfolgte weder eine Entmischung noch eine Koagulation.

**Tabelle 7: Wärmestand und Anfangsfestigkeit von wässrigen Formulierungen enthaltend Frischsol bzw. einen organischen Verdicker und Polyurethan**

| **Beispiel-Nr.** | **V52** | **53** | **V54** | **55** |
|---|---|---|---|---|
| Polyurethan aus Beispiel 1 | 99,5 | 95 | 98,64 | 90 |
| Levasil^{®} CS 6-P3 | - | 5 | - | 10 |
| Borchigel^{®} ALA | 0,5 | - | 1,36 | - |
| Viskosität [mPa·s] | 1.440 | 1.340 | 3.310 | 3.340 |
| pH | 6,6 | 6,9 | 6,8 | 6,8 |

| Wärmestandsmessung | | | | |
|---|---|---|---|---|
| Temperatur [°C] | 70 | 90 | 70 | 90 |
| Zeit [min.] | 136 | 251 | 153 | 274 |

| Anfangsfestigkeit (2K-Verfahren) | | | | |
|---|---|---|---|---|
| Testergebnis | 2 | 1 | 2 | 1 |

| | | | | |
|---|---|---|---|---|
| Alle Angaben in Gew.-%, sofern nicht anders angegeben V Vergleichsbeispiel | | | | |

Im Gegensatz zu organischen Verdickern wirkte Frischsol in wässrigen Dispersionen von anionisch hydrophilierten Polyurethanen nicht nur als Verdicker, sondern erhöhte auch den Wärmestand der Formulierungen unabhängig von der Mischungsviskosität um beispielsweise 20 °C und verbesserte zusätzlich die Anfangsfestigkeit bei der 2K-Sprühapplikation.

## Patentansprüche

1. Wässrige Dispersion mindestens enthaltend
(A) mindestens ein Polyurethan,
(B) mindestens ein Frischsol und
(C) gegebenenfalls weitere Additive,
**dadurch gekennzeichnet, dass** das mindestens ein Polyurethan anionisch hydrophiliert ist.

2. Dispersion nach Anspruch 1, **dadurch gekennzeichnet, dass** das mindestens ein Polyurethan teilkristallin oder amorph ist, bevorzugt mit einer Glasübergangstemperatur Tg von -65 bis 10 °C.

3. Dispersion nach Anspruch 1 oder 2, **dadurch gekennzeichnet, dass** sie
A) 60 bis 99,9 Gew.-%, bevorzugt 85 bis 99,6 Gew.-% des mindestens ein Polyurethans, welches anionisch hydrophiliert ist,
B) 0,1 bis 40 Gew.-%, bevorzugt 0,2 bis 30 Gew.-%, besonders bevorzugt 0,4 bis 15 Gew.-%, des mindestens einen Frischsols,
C) 0,1 bis 30 Gew.-% weitere Additive,
jeweils bezogen auf das Gesamtgewicht der entstehenden wässrigen Dispersion, wobei die Summe der vorliegenden Komponenten jeweils 100 Gew.-% ergibt, enthält.

4. Dispersion nach einem der Ansprüche 1 bis 3, **dadurch gekennzeichnet, dass** das mindestens ein Polyurethan aufgebaut ist aus
a) mindestens einem difunktionellen Polyesterpolyol, bevorzugt mit einem Molekulargewicht von 400 bis 5000 g/mol,
b) mindestens einem Polyisocyanat, und
c) mindestens einem Kettenverlängerer,
d) gegebenenfalls weiteren von a), b) und c) unterschiedlichen Bausteinen,
wobei zumindest eine der Komponenten a), b), c) und d) mindestens eine anionisch hydrophilierende Gruppe trägt.

5. Dispersion nach Anspruch 4, **dadurch gekennzeichnet, dass** in dem mindestens einen Polyurethan die als Komponente c) eingesetzte Verbindung die mindestens eine anionisch hydrophilierende Gruppe trägt und bevorzugt ausgewählt ist aus der Gruppe bestehend aus Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren, deren Alkali- und Ammoniumsalzen und Mischungen davon.

6. Dispersion nach einem der Ansprüche 1 bis 5, **dadurch gekennzeichnet, dass** das mindestens eine Frischsol einen pH-Wert von 1,0 bis 3,5, bevorzugt 1,5 bis 3,0, besonders bevorzugt 1,7 bis 2,9, aufweist.

7. Verfahren zur Herstellung der Dispersion nach einem der Ansprüche 1 bis 6, **dadurch gekennzeichnet, dass** eine mindestens ein Polyurethan enthaltende wässrige Dispersion mit dem mindestens einen Frischsol und gegebenenfalls weiteren Additiven vermischt werden.

8. Klebstoffzusammensetzung, mindestens enthaltend eine Dispersion nach einem der Ansprüche 1 bis 6.

9. Klebstoffverbund, enthaltend mindestens ein mit einer Klebstoffzusammensetzung nach Anspruch 8 verklebtes Substrat.

10. Klebstoffverbund nach Anspruch 9, **dadurch gekennzeichnet, dass** das mindestens eine Substrat ausgewählt ist aus der Gruppe bestehend aus Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen und Kombinationen davon.

11. Verfahren zur Herstellung eines Klebstoffverbundes, wobei mindestens ein Substrat mit der Klebstoffzusammensetzung nach Anspruch 9 oder 10 verklebt wird.

12. Verfahren nach Anspruch 11, **dadurch gekennzeichnet, dass** die Klebstoffzusammensetzung nach Anspruch 8, insbesondere die erfindungsgemäße wässrige Dispersion nach einem der Ansprüche 1 bis 6 durch Streichen, Rollen, Spritzen und/oder Sprühen, Pinselauftrag oder Walzenauftrag auf das mindestens eine Substrat aufgebracht wird.

13. Verwendung der wässrigen Dispersion nach einem der Ansprüche 1 bis 6 zur Verklebung von Holz, Papier, thermoplastischen Kunststoffen, elastomeren Kunststoffen, thermoplastisch- elastomeren Kunststoffen, Vulkanisaten, textilen Geweben, Gewirken, Geflechten, Leder, Metallen, Keramik, Asbestzement, Steinzeug, Beton, Schaumstoffen und Kombinationen davon, jeweils miteinander und/oder an porige Substrate, bevorzugt mit einer Dichte von weniger als 1 kg/Liter.

14. Verwendung eines Frischsols zum Erzielen einer Verdickerwirkung in einer wässrigen Polyurethan-Dispersion.
